# EUROPEAN PATENT SPECIFICATION

(11) **EP 2 468 946 B1**
(45) Date of publication and mention of the grant of the patent: **07.05.2014**
(21) Application number: 10197043.2
(22) Date of filing: 27.12.2010
(51) Int. Cl.: D06F 58/20

(54) **A heat pump system for a laundry dryer and a method for operating a heat pump laundry dryer**
Wärmepumpensystem für einen Wäschetrockner und Verfahren zum Betreiben eines Wäschetrockners mit Wärmepumpe
Système de pompe à chaleur pour sèche-linge et procédé de fonctionnement d'un sèche-linge à pompe à chaleur

(43) Date of publication of application: 27.06.2012
(73) Proprietor: Electrolux Home Products Corporation N.V., 1130 Brussel (BE)
(72) Inventor: Cavarretta, Francesco, 33080, Porcia (PN) (IT)
(74) Representative: Nardoni, Andrea

(56) References cited:
- WO-A1-2005/075728
- WO-A1-2009/106150
- US-A1- 2005 066 538

## Description

The present invention relates to a heat pump laundry dryer according to the preamble of claim 1 (e.g. see document WO-A1-2005/075728). Additionally, the present invention relates to a method for operating a heat pump laundry dryer.

In laundry dryer the heat pump technology is an efficient way to save energy during drying laundry. The conventional laundry dryer comprises a closed air stream circuit and a closed refrigerant circuit. In the air stream circuit hot dry air is blown by an air fan into the drum removing moisture from wet laundry. Then the warm humid air leaves the drum and is cooled down and dehumidified in an evaporator. Then the cooled air is heated up in a condenser and blown into the drum again.

A refrigerant in the refrigerant circuit is compressed by a compressor, condensed in a condenser, laminated in an expansion device and then vaporised in an evaporator. The air stream circuit and the refrigerant circuit are thermally coupled by at least two heat exchangers, i.e. the evaporator and the condenser, so that the air temperature and the refrigerant temperature are strictly connected to each other.

The cycle in the heat pump laundry dryer includes two phases, namely a transitory warm-up phase and a steady working phase. In the beginning of the transitory warm-up phase the temperatures of the air and the refrigerant are at the ambient temperature. During the transitory warm-up phase the temperatures of the air and the refrigerant increases to a desired level. During the steady working phase the temperatures of the air and the refrigerant are kept at a constant level until the laundry has been dried. Said constant level may be obtained by a cooling fan or an auxiliary condenser. Since the additional air fan or the auxiliary condenser work with an on-off logic control, the temperatures and the pressures of the air and the refrigerant oscillate around the desired values.

It is an object of the present invention to provide a heat pump laundry dryer, which allows an improved performance. It is an object of the present invention to provide a heat pump system that is able to maintain the refrigerant conditions in term of pressure/temperature more stable during the steady working phase.

Further, it is an object of the present invention to provide a corresponding method for operating said heat pump laundry dryer.

The object of the present invention is achieved by the heat pump system according to claim 1.

The present invention includes at least one refrigerant phase separator arranged between the heat pump evaporator the heat pump compressor and additional refrigerant evaporating means arranged between the refrigerant phase separator and the heat pump compressor. This arrangement allows the refrigerant at an outlet of the heat pump evaporator to be in liquid/vapour bi-phase mixture, i.e. not completely vaporised, so that the heat pump evaporator is flooded. Thus, the evaporation pressure and the flow rate of the refrigerant are increased resulting in a higher performance of the heat pump system since according to the present invention there is no need to superheat the refrigerant at the heat pump evaporator outlet.
Further, as it is clearly evident, the refrigerant liquid/vapour bi-phase mixture at the heat pump evaporator outlet provides a greater heat capacity than a refrigerant vapour single phase, thereby increasing the cooling effect of the heat pump evaporator with respect of the process air.

Preferably, the refrigerant phase separator has an inlet that connects the refrigerant phase separator to the heat pump evaporator and two outlets, i.e. vapour phase outlet and liquid phase outlet.

Preferably, the refrigerant phase separator is arranged downstream of the heat pump evaporator with respect to the flow direction of the refrigerant along the heat pump system.

Preferably, the additional refrigerant evaporating means are arranged inside the air stream circuit.

Preferably, the additional refrigerant evaporating means comprise at least an additional evaporator thermally coupled to the air stream circuit for cooling down and dehumidifying the air stream in the air stream circuit.

Preferably, the refrigerant circuit includes at least one refrigerant phase separator and at least one additional evaporator between the heat pump evaporator and the heat pump compressor, so that a vapour phase of the refrigerant from the heat pump evaporator is directly fed to the heat pump compressor and a liquid phase of the refrigerant heat pump evaporator is indirectly fed to the heat pump compressor via the additional evaporator.

Preferably, the additional evaporator is arranged upstream or downstream of the heat pump evaporator with respect to the direction of the air stream in the air stream circuit.

Preferably, the additional evaporating means comprise a low pressure side of a refrigerant internal heat exchanger.

Preferably, the low pressure side of the refrigerant internal heat exchanger is arranged between a liquid phase outlet of the refrigerant phase separator and a refrigerant mixing section provided upstream of the heat pump compressor.

Preferably, the low pressure side of the refrigerant internal heat exchanger is arranged between a refrigerant mixing section and the heat pump compressor.

The refrigerant mixing section is defined as the section wherein the refrigerant coming from the vapour phase outlet of the refrigerant phase separator and the refrigerant coming from the liquid phase outlet of the refrigerant phase separator mix together before entering the compressor.

Preferably, the refrigerant phase separator is adapted to separate the liquid phase and the vapour phase of the refrigerant by gravity. The refrigerant phase separator can be realized without moveable components.

Preferably, the refrigerant circuit includes a valve arranged between the refrigerant phase separator and the additional evaporating means. Preferably, the valve is switchable by an on-off mode. Thus, the additional evaporator means can be switched off. This is advantageous during a transitory warm-up phase.

Preferably, the expansion means are controllable in response to the refrigerant liquid amount and/or the refrigerant vapour amount contained in the refrigerant phase separator.

Preferably, the expansion means are controllable in response to the refrigerant liquid level inside the refrigerant phase separator.

In particular, the air stream circuit includes at least one air fan.

According to another embodiment of the present invention the expansion means are controllable in response to the temperature of the refrigerant at an inlet of the heat pump compressor.

According to another embodiment of the present invention the expansion means are controllable in response to the superheating level of the refrigerant at an inlet of the heat pump compressor.

Preferably, a cooling fan is provided to cool down the heat pump compressor and/or an auxiliary refrigerant condenser is provided between the heat pump compressor and the expansion means to release the excess heat of the heat pump system. The auxiliary refrigerant condenser is arranged outside the air steam circuit

According to another embodiment of the present invention, the heat pump evaporator and the additional refrigerant evaporating means form a structural unit.

Preferably, the heat pump evaporator and the additional evaporator may comprise at least one common battery of fins.

In another embodiment of the present invention a refrigerant economizer may be arranged between the outlet of the additional evaporator (arranged inside the air stream circuit) on the one hand and the outlet of the heat pump condenser on the other hand. Preferably a high pressure side of the heat pump system is thermally coupled to a low pressure side of the heat pump system. The refrigerant economizer allows a superheating of that refrigerant exiting the additional evaporator.

The object of the present invention is further achieved by the method for operating the heat pump laundry dryer according to claim 12.

Said method for operating a heat pump system of a tumble dryer comprises the steps of:
- compressing and heating up a refrigerant in a closed refrigerant circuit by a heat pump compressor,
- condensing and cooling down the refrigerant by a heat pump condenser, wherein an air stream in an air stream circuit is heated up by said heat pump condenser,
- expanding and cooling down the refrigerant by expansion means,
- heating up the refrigerant by a heat pump evaporator, wherein the air stream in the air stream circuit is cooled down and dehumidified by said heat pump evaporator,
either
- dividing the refrigerant in a liquid phase and a vapour phase,
- feeding the vapour phase to the heat pump compressor,
- feeding the liquid phase to additional refrigerating evaporating means for heating up and vaporising the liquid phase,
- feeding the refrigerant vaporised phase to the heat pump compressor,
or
- dividing the refrigerant in a refrigerant liquid phase and a refrigerant vapour phase,
- feeding the refrigerant vapour phase and the refrigerant liquid phase to additional refrigerating evaporating means for heating up and vaporising the refrigerant,
- feeding the refrigerant to the heat pump compressor.

The main idea of the present invention is the dividing of the refrigerant in a liquid phase and a vapour phase by the refrigerant phase separator, wherein, in a first alternative, said liquid phase is fed to additional refrigerant evaporating means to be vaporized, then the refrigerant vapour phase coming from the refrigerant phase separator and the refrigerant vapour phase coming from the additional refrigerant evaporating means are fed to the heat pump compressor, in a second alternative, said liquid phase and said vapour phase are fed to additional refrigerant evaporating means and the refrigerant liquid/vapour bi-phase mixture is heated up and vaporized before entering the heat pump compressor

This arrangement allows the refrigerant at the outlet of the heat pump evaporator to be in liquid/vapour bi-phase mixture, i.e. not completely vaporised, so that the heat pump evaporator is flooded. Thus, the evaporation pressure and the flow rate of the refrigerant are increased resulting in a higher performance of the heat pump system since according to the present invention there is not need to superheat the refrigerant at the heat pump evaporator outlet. Further, as it is clearly evident, the refrigerant liquid/vapour bi-phase mixture at the heat pump evaporator outlet provides a greater heat capacity than a refrigerant vapour single phase, thereby increasing the cooling effect of the heat pump evaporator with respect of the process air.

Preferably, the expanding and cooling down of the refrigerant by expansion means may be controlled in response to the temperature of the refrigerant at an inlet of the heat pump compressor.

Preferably, the expanding and cooling down of the refrigerant by expansion means may be controlled in response to the refrigerant liquid amount and/or refrigerant vapour amount contained in the refrigerant phase separator.

Preferably, the expanding and cooling down of the refrigerant by expansion means may be controlled in response to the refrigerant liquid level inside the refrigerant phase separator.

According to another embodiment of the present invention the expansion means are controllable in response to superheating level of the refrigerant at an inlet of the heat pump compressor.

Preferably, the method comprises the step of cooling down and dehumidifying the air stream in the air stream circuit by the additional refrigerant evaporating.

Preferably, the feeding of the liquid phase to the additional refrigerant evaporating may be interrupted during a transitory warm-up phase.

It is to be noted that the present invention is applicable to heat pump circuit wherein the pressure of the refrigerant is above the critical pressure at the high pressure side of the heat pump circuit. For example in CO₂ trans-critical system, the Carbon Dioxide refrigerant is always in gaseous phase (of course when the heat pump system is in steady working condition) between the compressor outlet and expansion means inlet (i.e. the high pressure side of the heat pump circuit). Therefore in trans-critical system there is no refrigerant condensation in the heat pump condenser which acts simply as a gas cooler.
It follows that in the present invention heat pump condenser it to be interpreted as heat pump gas cooler in case of trans-critical system.

The novel and inventive features believed to be the characteristic of the present invention are set forth in the appended claims.

The invention will be described in further detail with reference to the drawings, in which
- FIG 1: illustrates a schematic diagram of a heat pump system for a tumble dryer according to a first embodiment of the present invention,
- FIG 2: illustrates a detailed schematic view of a refrigerant phase separator, a heat pump evaporator and an additional evaporator of the heat pump system according to the first embodiment of the present invention,
- FIG 3: illustrates a schematic diagram of the heat pump system for the tumble dryer according to a second embodiment of the present invention, and
- FIG 4: illustrates a schematic diagram of the heat pump system for the tumble dryer according to a third embodiment of the present invention.

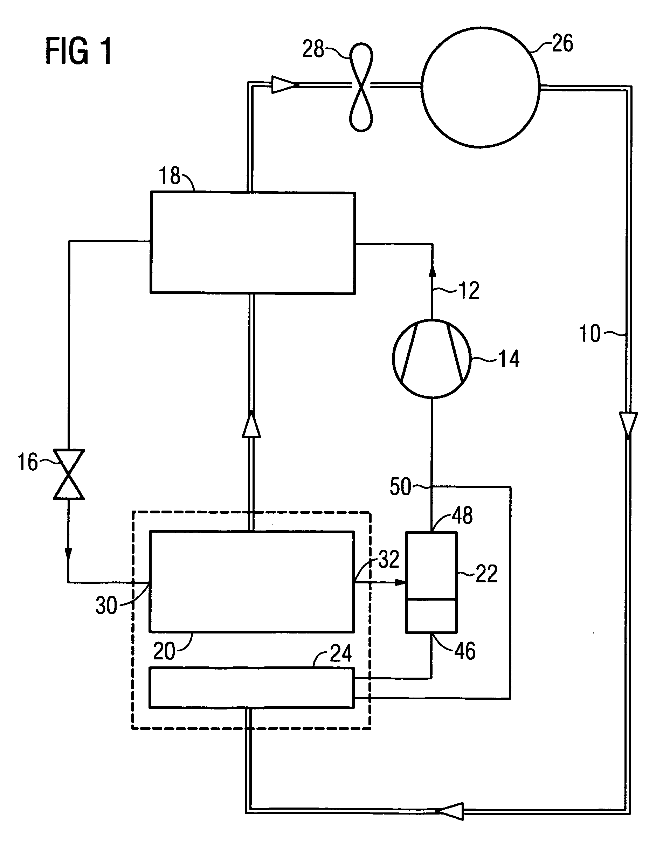

FIG 1 illustrates a schematic diagram of a heat pump laundry dryer, preferably a tumbled dryer, according to a first embodiment of the present invention. The heat pump system comprises an air stream circuit 10 and a refrigerant cir― cuit 12.

The air stream circuit 10 includes an air fan 28, a laundry drum 26, a heat pump condenser 18, a heat pump evaporator 20 and an additional evaporator 24. The laundry drum 26 is provided for receiving laundry to be dried. The air fan 28 is provided for moving the air stream within the air stream circuit 10. The air stream circuit 10 is formed, preferably, as a closed loop.

The heat pump condenser 18, the heat pump evaporator 20 and the additional evaporator 24 are heat exchangers and form the thermal interconnections between the air stream circuit 10 and the refrigerant circuit 12. The heat pump evaporator 20 comprises an evaporator inlet 30 and an evaporator outlet 32. The heat pump evaporator 20 and the additional evaporator 24 are provided for cooling down and dehumidifying the air stream in the air stream circuit 10, after the said air stream has passed the laundry drum 26. The heat pump condenser 18 is provided for heating up the air stream in the air stream circuit 10, before said air stream is reinserted into the laundry drum 26.

The refrigerant circuit 12 includes a heat pump compressor 14, the heat pump condenser 18, expansion means 16, the heat pump evaporator 20, a refrigerant phase separator 22 and the additional evaporator 24. The refrigerant circuit 12 forms also a closed loop. The air stream circuit 10 and the refrigerant circuit 12 are thermally coupled by the heat pump condenser 18, the heat pump evaporator 20 and the additional evaporator 24.

The heat pump compressor 14, the heat pump condenser 18, the expansion means 16, the heat pump evaporator 20 and the refrigerant phase separator 22 are connected in series. The refrigerant phase separator 22 comprises one inlet and two outlets. The inlet of the refrigerant phase separator 22 is connected to the evaporator outlet 32. The vapour phase outlet 48 of the refrigerant phase separator 22 is directly connected to the heat pump compressor 14. The liquid phase outlet 46 of the refrigerant phase separator 22 is indirectly connected to the heat pump compressor 14 via the additional evaporator 24.

A refrigerant flows in the refrigerant circuit 12. The refrigerant is compressed by the heat pump compressor 14, condensed in the heat pump condenser 18, laminated in the expansion means 16, then vaporised in the heat pump evaporator 20 and separated by the refrigerant phase separator 22.

The refrigerant phase separator 22 is provided for dividing a liquid phase 36 and a vapour phase 38 of the refrigerant by gravity. The separated liquid phase 36 of the refrigerant is fed to the additional evaporator 24 via the liquid phase outlet 46 of the refrigerant phase separator 22, vaporised therein and sucked by the heat pump compressor 14. The separated vapour phase 38 of the refrigerant is directly sucked by the heat pump compressor 14 via the vapour phase outlet 48 of the refrigerant phase separator 22.

At the evaporator outlet 32 the refrigerant is preferably not completely vaporised. For example, a refrigerant quality has a value of about 0.90 to 0.99 at the evaporator outlet 32. The refrigerant quality is defined as the ratio of the vapour flow rate to the total flow rate, i.e. the flow rate of the vapour and liquid. If the refrigerant quality is one, then all the refrigerant would be vaporized at the evaporator outlet 32 of the heat pump evaporator 20. If the refrigerant quality is less than one, then a part of the refrigerant is still in the liquid phase 36.

In the refrigerant phase separator 22 the mixture of the liquid phase 36 and the vapour phase 38 of the refrigerant is divided by gravity into a saturated vapour and a saturated liquid. Due to the difference of density of the liquid phase 36 and the vapour phase 38, the refrigerant phase separator 22 divides the mixed refrigerant. The vapour phase 38 is sucked by the heat pump compressor 14 and the liquid phase 36 is sent to the additional evaporator 24. The liquid phase 36 is vaporised in the additional evaporator 24 and then sucked by the heat pump compressor 14.

The additional evaporator 24 may be formed as a small evaporator separated from the heat pump evaporator 20. Alternatively, the additional evaporator 24 may be formed as a pipe arranged within the same battery of fins as the heat pump evaporator 20. Said pipe may have one or more serpentines. Moreover, in both embodiments mentioned above, the additional evaporator 24 may be arranged upstream or downstream of the heat pump evaporator 20 with respect to the direction of the air stream.

The size of the heat pump evaporator 20 may be reduced with respect to heat pump evaporators of the prior art since the refrigerant is neither completely vaporized not superheated at the outlet of the heap pump evaporator 20. The saturated liquid in the refrigerant phase separator 22 is a relative small percentage of the whole refrigerant flow rate, so that the size of the additional evaporator 24 may be very small.

Since the refrigerant at the evaporator outlet 32 is not completely vaporised, the heat pump evaporator 20 is flooded, so that the evaporation pressure and the flow rate of the refrigerant are increased. This results in a higher performance of the whole heat pump system.

The cycle of the heat pump system includes a transitory warm-up phase and a steady working phase. During the transitory warm-up phase the temperatures of the air stream and the refrigerant increases to a desired level. During the steady working phase the temperatures of the air stream and the refrigerant are kept at a constant level until the laundry has been dried.

In another embodiment of the present invention a refrigerant economizer may be arranged between the outlet of the additional evaporator 24 on the one hand and the outlet of the heat pump condenser 18 on the other hand, wherein a high pressure side of the heat pump system is thermally coupled to a low pressure side of the heat pump system. Said refrigerant economizer allows a superheating of that refrigerant exiting the additional evaporator 24.

Superheating is the difference between the fluid temperature at the evaporator outlet 32 and the saturation temperature corresponding to the evaporation pressure. If the superheating is zero, then the temperature at the evaporator outlet 32 is exactly the temperature of saturation. If the superheating is more than zero, then the temperature at the evaporator outlet 32 is bigger than the temperature of saturation for the refrigerant.

A certain superheating of the refrigerant is advantageous for the lifetime of the heat pump system, because the heat pump compressor 18 cannot be fed up by liquid. Further, the certain superheating of the refrigerant is useful at the beginning of the drying cycle, because the heat pump compressor 18 speeds up in a transitory warm-up phase. The bigger the temperature of the refrigerant is at the outlet of the heat pump evaporator 20 and the additional evaporator 24 and at the inlet of the heat pump compressor 18, respectively, the bigger the temperature is at the outlet of the heat pump compressor 18.

In an embodiment with an auxiliary condenser arranged outside the air stream circuit 10 and between the heat pump condenser 18 and the expansion valve 16, the temperature and pressure of the fluid may be kept at a constant desired level.

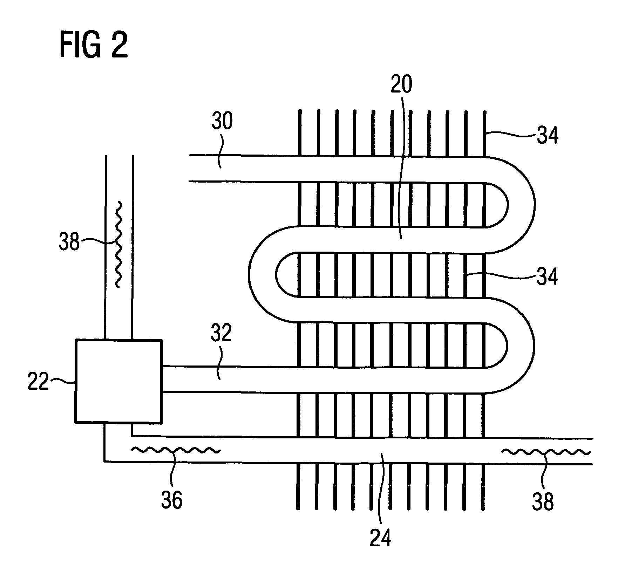

FIG 2 illustrates a detailed schematic view of the refrigerant phase separator 22, the heat pump evaporator 20 and the additional evaporator 24 of the heat pump system according to the first embodiment of the present invention.

FIG 2 clarifies a possible arrangement of the heat pump evaporator 20 and the additional evaporator 24. In this embodiment the heat pump evaporator 20 and the additional evaporator 24 form a new heat pump evaporator. A compact unit includes the heat pump evaporator 20 as well as the additional evaporator 24.

A battery of fins 24 encloses the heat pump evaporator 20 and the additional evaporator 24. In this example, the heat pump evaporator 20 includes a pipe with three serpentines. The additional evaporator 24 includes a straight pipe. Both pipes are arranged beside or within the same battery of fins 24.

According to a further embodiment of the present invention the heat pump system comprises controlled expansion means 16. The expansion means 16 may be formed as a controlled valve. The controlled expansion means 16 can maintain the superheated refrigerant at the evaporator outlet 32 during the transitory warm-up phase. However, during the steady working phase the expansion means 16 are controlled in response to a level of the refrigerant liquid inside of the refrigerant phase separator 22. Said level may be detected by a liquid level sensor, e.g. a float level sensor or a capacitive level sensor. In practise, below a certain refrigerant liquid level the controlled valve is opened by a control unit to increase the refrigerant flow rate to be fed to the heat pump evaporator 20.

The temperature of the air stream, preferably at the inlet of the laundry drum 26, can be used as parameters for detecting the turning point between the transitory warm-up phase and the steady working phase. In a similar way, the temperature and/or the pressure of the refrigerant at the heat pump condenser 18, preferably at the outlet of the heat pump condenser 18, can be used as parameters for detecting the turning point between the transitory warm-up phase and the steady working phase.

If the level of a liquid-vapour interface in the refrigerant phase separator 22 remains constant and the additional evaporator 24 id fed up, then the heat pump evaporator 20 is flooded and the refrigerant quality is less than one. The flow rate of the liquid refrigerant from the refrigerant phase separator 22 to the additional evaporator 24 is the same as the flow rate of the liquid refrigerant from the heat pump evaporator 20 to the refrigerant phase separator 22.

In another embodiment, which can be provided as an alternative or in combination to the above mentioned embodiment, the expansion means 16 may be controlled by the temperature at an inlet of the heat pump compressor 14 or by the superheating level of the refrigerant at an inlet of the heat pump compressor 14. The inlet of the heat pump compressor 14 is arranged downstream of a refrigerant mixing section 50, where the refrigerant coming from the vapour phase outlet 48 of the refrigerant phase separator 22 and the refrigerant coming form the additional evaporator 24 mix together. Plurality of tests provides indications about the refrigerant temperature values or about the refrigerant superheating values at heat pump compressor inlet for having the heat pump evaporator 20 flooded.

Moreover, a valve with an on-off mode may be arranged between the refrigerant phase separator 22 and the additional evaporator 24. Said valve is closed during the transitory warm-up phase and opened during the steady working phase. During the transitory warm-up phase there is no need for having the heat pump evaporator 20 flooded, on the contrary the superheating speeds up the warm-up phase. In order to switch the valve the temperature of the air stream, e.g. at an inlet of the laundry drum 26, may be used as a control parameter. Further, the temperature and/or the pressure of the refrigerant at the heat pump condenser 18, preferably at the outlet of the heat pump condenser 18, may be used as parameter for controlling the valve.

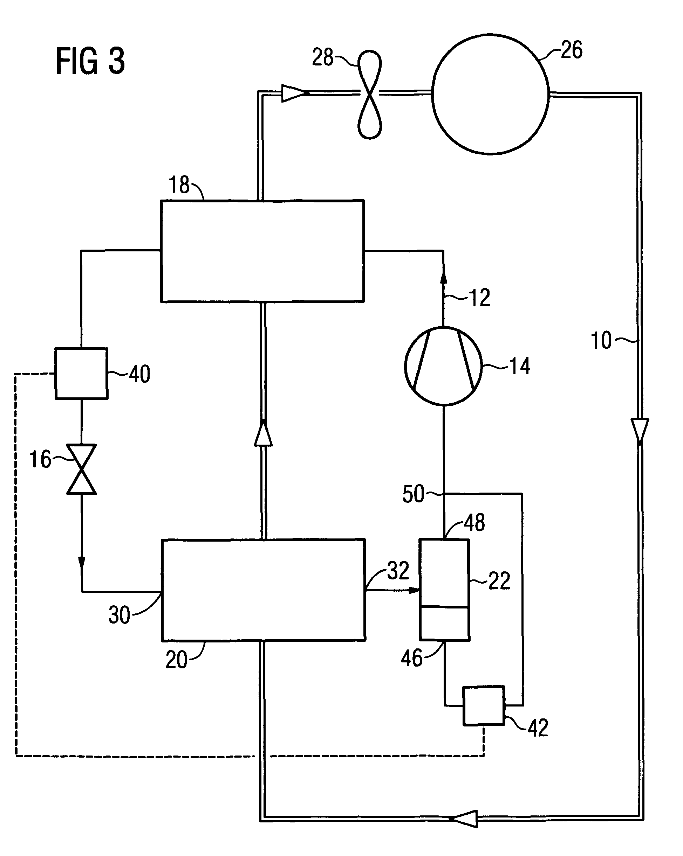

FIG 3 illustrates a schematic diagram of the heat pump system for the tumble dryer according to a second embodiment of the present invention. The heat pump system of the second embodiment includes substantially the same components as the heat pump system of the first embodiment according to FIG 1.

Instead of the additional evaporator 24 the heat pump system of the second embodiment comprises additional evaporating means. The additional evaporating means include a low pressure side 42 of an internal heat exchanger. Said internal heat exchanger comprises also a high pressure side 40. The low pressure side 42 of the internal heat exchanger is arranged within a low temperature portion of the refrigerant circuit 12. In a similar way, the high pressure side 40 of the internal heat exchanger is arranged within a high temperature portion of the refrigerant circuit 12.
The low pressure side 42 of the internal heat exchanger is arranged between the liquid phase outlet 46 of the refrigerant phase separator 22 and a refrigerant mixing section 50.
The high pressure side 40 and the low pressure side 42 of the internal heat exchanger are thermally coupled so that the high temperature refrigerant flowing through the high pressure side 40 releases heat to the low temperature refrigerant flowing through the low pressure side 42.

The refrigerant flowing through the low pressure side 42 of the internal heat exchanger is vaporized by the heat released from the high pressure side 40 of the internal heat exchanger. Since the flow rate of the refrigerant flowing through the low pressure side 42 is low, a sub-cooling effect on the high pressure side 40 is also low. Further, only a small part of the refrigerant is superheated on the low pressure side 42, while a bigger part of the refrigerant is in a saturation condition, but not superheated. Thus, downstream of the refrigerant mixing section 50 of the two outlets 46, 48 of the refrigerant phase separator 22 all refrigerant is only very slightly superheated. In fact there are two different flow rates of the refrigerant from the two outlets of the refrigerant phase separator 22 and the one from the vapour phase outlet 48, which is in saturation condition, is bigger.

Moreover, a valve with an on-off mode may be arranged between the refrigerant phase separator 22 and the low pressure side 42 of the internal heat exchanger. Said valve is closed during the transitory warm-up phase and opened during the steady working phase. During the transitory warm-up phase there is no need for having the heat pump evaporator 20 flooded, on the contrary the superheating speeds up the warm-up phase. In order to switch the valve the temperature of the air stream, e.g. at an inlet of the laundry drum 26, may be used as a control parameter. Further, the temperature and/or the pressure of the refrigerant at the heat pump condenser 18, preferably at the outlet of the heat pump condenser 18, may be used as parameter for controlling the valve.
Of course, no heat transfer occurs between the high pressure side 40 and the low pressure side 42 of the internal heat exchanger when the valve is off, since the low pressure side 42 is not fed up with refrigerant.

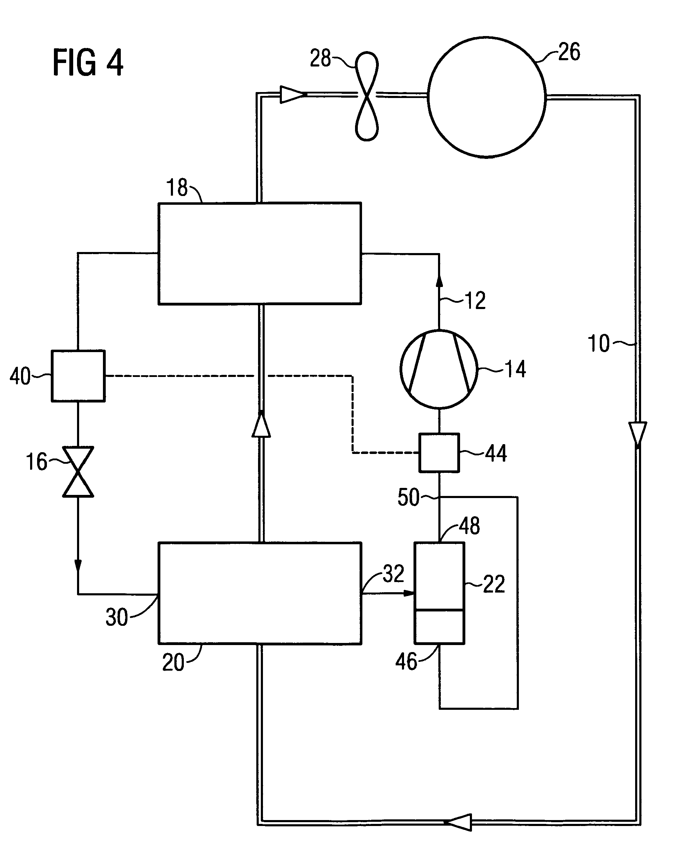

FIG 4 illustrates a schematic diagram of the heat pump system for the tumble dryer according to a third embodiment of the present invention. The heat pump system of the third embodiment comprises also additional evaporating means including a low pressure side 44 and the high pressure side 40.

The heat pump system of the third embodiment differs from the heat pump system of the second embodiment in the positions of the low pressure sides 42 and 44, respectively, of the internal heat exchanger. The low pressure side 44 of the internal heat exchanger is arranged downstream of the refrigerant mixing section 50 of the two outlets 46, 48 of the refrigerant phase separator 22. This arrangement of the low pressure side 44 of the internal heat exchanger guarantees a higher superheating of the whole refrigerant flow rate than in the previous embodiment.

Preferably, a valve with an on-off mode may be arranged between the vapour phase outlet 48 of the refrigerant phase separator 22 and the refrigerant mixing section 50. Said valve is closed during the transitory warm-up phase and opened during the steady working phase. During the transitory warm-up phase there is no need for having the heat pump evaporator 20 flooded, on the contrary the superheating speeds up the warm-up phase. In order to switch the valve the temperature of the air stream, e.g. at an inlet of the laundry drum 26, may be used as a control parameter. Further, the temperature and/or the pressure of the refrigerant at the heat pump condenser 18, preferably at the outlet of the heat pump condenser 18, may be used as parameter for controlling the valve.
Clearly, the refrigerant mixing section 50 can be formed by the inlet of the low pressure side 44 of the internal heat exchanger, the inlet being fluidly connected to the vapour phase outlet 48 and to the liquid vapour phase 46 of the refrigerant phase separator 22.

Also the heat pump systems of the second and third embodiments allow that the heat pump evaporator 20 can be kept flooded, i.e. the refrigerant is not completely vaporized at the evaporator outlet 32.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: air stream circuit
- 12: refrigerant circuit
- 14: heat pump compressor
- 16: expansion means
- 18: heat pump condenser
- 20: heat pump evaporator
- 22: refrigerant phase separator
- 24: additional evaporator
- 26: laundry drum
- 28: air fan
- 30: evaporator inlet
- 32: evaporator outlet
- 34: fin
- 36: liquid phase
- 38: vapour phase
- 40: high pressure side of an internal heat exchanger
- 42: low pressure side of an internal heat exchanger
- 44: low pressure side of an internal heat exchanger
- 46: liquid phase outlet
- 48: vapour phase outlet
- 50: refrigerant mixing section

## Claims

1. A laundry dryer with heat pump system, wherein:
- the heat pump system comprises an air stream circuit (10) for an air stream and a closed refrigerant circuit (12) for a refrigerant,
- the air stream circuit (10) includes a heat pump condenser (18), a heat pump evaporator (20) and a laundry drum (26),
- the refrigerant circuit (12) includes at least one heat pump compressor (14), the heat pump condenser (18), expansion means (16) and the heat pump evaporator (20),
- the air stream circuit (10) and the refrigerant circuit (12) are thermally coupled by the heat pump condenser (18) and the heat pump evaporator (20),
- the heat pump condenser (18) is a heat exchanger and provided for heating up the air stream and cooling down the refrigerant, and
- the heat pump evaporator (20) is a heat exchanger and provided for cooling down the air stream and heating up the refrigerant,
the refrigerant circuit (12) includes at least one refrigerant phase separator (22) arranged between the heat pump evaporator (20) and the heat pump compressor **characterized in that** additional refrigerant evaporating means (24, 42, 44) are arranged between refrigerant phase separator (22) and the heat pump compressor (14).

2. The laundry dryer according to claim 1, wherein the refrigerant phase separator (22) is arranged downstream of the heat pump evaporator (20) with respect to the flow direction of the refrigerant along the heat pump system

3. The laundry dryer according to claim 1 or 2, wherein the additional refrigerant evaporating means (24, 42, 44) comprise at least an additional evaporator (24) thermally coupled to the air stream circuit (10) for cooling down and dehumidifying the air stream in the air stream circuit (10).

4. The laundry dryer according to claim 3, wherein the additional evaporator (24) is arranged upstream or downstream of the heat pump refrigerant evaporator (20) with respect to the direction of the air stream in the air stream circuit (10).

5. The laundry dryer according to claim 1, wherein the additional evaporating means (24, 42, 44) comprise a low pressure side (42, 44) of a refrigerant internal heat exchanger.

6. The laundry dryer according to claim 5, wherein the low pressure side (42) of the internal heat exchanger is arranged between a liquid phase outlet (46) of the refrigerant phase separator (22) and a refrigerant mixing section (50) provided upstream of the heat pump compressor (14).

7. The laundry dryer according to claim 5, wherein the low pressure side (44) of the internal heat exchanger is arranged between a refrigerant mixing section (50) and the heat pump compressor (14).

8. The laundry dryer to any one of the preceding claims, wherein the refrigerant phase separator (22) separates the liquid phase and the vapour phase of the refrigerant by gravity.

9. The laundry dryer according to any one of the preceding claims, wherein the refrigerant circuit (12) includes valve means arranged between the refrigerant phase separator (22) and the additional refrigerant evaporating means (24, 42), the valve means can be closed so that the additional refrigerant evaporator can be switched off.

10. The laundry dryer according to any one of the preceding claims, wherein the expansion means (16) are controllable in response to the refrigerant liquid amount and/or refrigerant vapour amount contained in the refrigerant phase separator (22).

11. The laundry dryer according to any one of the preceding claims, wherein the expansion means (16) are controllable in response to the refrigerant liquid level inside the refrigerant phase separator (22).

12. A method for operating a heat pump system of a tumble dryer, said method comprises the steps of:
- compressing and heating up a refrigerant in a closed refrigerant circuit by a heat pump compressor,
- condensing and cooling down the refrigerant by a heat pump condenser, wherein an air stream in an air stream circuit is heated up by said heat pump condenser,
- expanding and cooling down the refrigerant by expansion means,
- heating up the refrigerant by a heat pump evaporator, wherein the air stream in the air stream circuit is cooled down and dehumidified by said heat pump evaporator, **characterized by**
either
- (a1) dividing the refrigerant in a liquid phase and a vapour phase,
- (a2) feeding the vapour phase to the heat pump compressor,
- (a3) feeding the liquid phase to additional refrigerating evaporating means for heating up and vaporising the liquid phase,
- (a4)feeding the refrigerant vaporised phase to the heat pump compressor,
or
- (b1) dividing the refrigerant in a refrigerant liquid phase and a refrigerant vapour phase,
- (b2) feeding the refrigerant vapour phase and the refrigerant liquid phase to additional refrigerating evaporating means for heating up and vaporising the refrigerant,
- (b3) feeding the refrigerant to the heat pump compressor.

13. The method according to claim 12, wherein the expanding and cooling down of the refrigerant by expansion means (16) is controlled in response to the refrigerant liquid level inside the refrigerant phase separator (22).

14. The method according to claim 12 or 13, wherein the feeding of the liquid phase (36) to the additional refrigerant evaporating means (24) is interrupted during a transitory warm-up phase.

15. The method according to any one of the claims 12 to 14, comprising the step of cooling down and dehumidifying the air stream in the air stream circuit by the additional refrigerant evaporating.

## Patentansprüche

1. Wäschetrockner mit Wärmepumpensystem, wobei:
das Wärmepumpensystem einen Luftstromkreislauf (10) für einen Luftstrom und einen geschlossenen Kältemittelkreislauf (12) für ein Kältemittel umfasst,
- der Luftstromkreislauf (10) einen Wärmepumpenkondensator (18), einen Wärmepumpenverdampfer (20) und eine Wäschetrommel (26) umfasst,
- der Kältemittelkreislauf (12) zumindest einen Wärmepumpenkompressor (14), den Wärmepumpenkondensator (18), ein Dehnmittel (16) und den Wärmepumpenverdampfer (20) enthält,
- der Luftstromkreislauf (10) und der Kältemittelkreislauf (12) durch den Wärmepumpenkondensator (18) und den Wärmepumpenverdampfer (20) thermisch verbunden sind,
- der Wärmepumpenkondensator (18) ein Wärmetauscher und zum Erhitzen des Luftstroms und Kühlen des Kältemittels bereitgestellt ist, und
- der Wärmepumpenverdampfer (20) ein Wärmetauscher und zum Kühlen des Luftstroms und Erhitzen des Kältemittels bereitgestellt ist,
- der Kältemittelkreislauf (12) zumindest einen Kältemittelphasentrenner (22) enthält, der zwischen dem Wärmepumpenverdampfer (20) und dem Wärmepumpenkompressor angeordnet ist,
**dadurch gekennzeichnet, dass** ein weiteres Kältemittelverdampfungsmittel (24, 42, 44) zwischen dem Kältemittelphasentrenner (22) und dem Wärmepumpenkompressor (14) angeordnet ist.

2. Wäschetrockner nach Anspruch 1, wobei der Kältemittelphasentrenner (22) dem Wärmepumpenverdampfer (20) in Bezug auf die Strömungsrichtung des Kältemittels entlang des Wärmepumpensystems nachgeschaltet angeordnet ist.

3. Wäschetrockner nach Anspruch 1 oder 2, wobei das weitere Kältemittelverdampfungsmittel (24, 42, 44) zumindest einen weiteren Verdampfer (24) umfasst, der thermisch mit dem Luftstromkreislauf (10) verbunden ist, um den Luftstrom im Luftstromkreislauf (10) zu kühlen und zu entfeuchten.

4. Wäschetrockner nach Anspruch 3, wobei der weitere Verdampfer (24) dem Wärmepumpen-Kältemittelverdampfer (20) in Bezug auf die Richtung des Luftstroms im Luftstromkreislauf (10) vor- oder nachgeschaltet angeordnet ist.

5. Wäschetrockner nach Anspruch 1, wobei das weitere Verdampfungsmittel (24, 42, 44) eine Niedrigdruckseite (42, 44) eines internen Kältemittel-Wärmetauschers umfasst.

6. Wäschetrockner nach Anspruch 5, wobei die Niedrigdruckseite (42) des internen Wärmetauschers zwischen einem Flüssigphasenauslass (46) des Kältemittelphasentrenners (22) und einem Kältemittelmischabschnitt (50) angeordnet ist, der dem Wärmepumpenkompressor (14) vorgeschaltet ist.

7. Wäschetrockner nach Anspruch 5, wobei die Niedrigdruckseite (44) des internen Wärmetauschers zwischen einem Kältemittelmischabschnitt (50) und dem Wärmepumpenkompressor (14) angeordnet ist.

8. Wäschetrockner nach einem der vorstehenden Ansprüche, wobei der Kältemittelphasentrenner (22) die Flüssigphase und die Dampfphase des Kältemittels nach Schwerkraft trennt.

9. Wäschetrockner nach einem der vorstehenden Ansprüche, wobei der Kältemittelkreislauf (12) ein Ventilmittel enthält, das zwischen dem Kältemittelphasentrenner (22) und dem weiteren Kältemittelverdampfungsmittel (24, 42) angeordnet ist, wobei das Ventilmittel geschlossen werden kann, so dass der weitere Kältemittelverdampfer abgeschaltet werden kann.

10. Wäschetrockner nach einem der vorstehenden Ansprüche, wobei das Dehnmittel (16) in Reaktion auf die Kältemittel-Flüssigmenge und/oder die Kältemittel-Dampfmenge steuerbar ist, die im Kältemittelphasentrenner (22) enthalten ist.

11. Wäschetrockner nach einem der vorstehenden Ansprüche, wobei das Dehnmittel (16) in Reaktion auf die Kältemittel-Flüssigmenge im Kältemittelphasentrenner (22) steuerbar ist.

12. Verfahren zum Betreiben eines Wärmepumpensystems eines Wäschetrockners, wobei das Verfahren die Schritte umfasst:
- Komprimieren und Erhitzen eines Kältemittels in einem geschlossenen Kältemittelkreislauf durch einen Wärmepumpenkompressor,
- Kondensieren und Kühlen des Kältemittels durch einen Wärmepumpenkondensator, wobei ein Luftstrom in einem Luftstromkreislauf durch den Wärmepumpenkondensator erhitzt wird,
- Dehnen und Kühlen des Kältemittels durch ein Dehnmittel,
- Erhitzen des Kältemittels durch einen Wärmepumpenverdampfer, wobei der Luftstrom im Luftstromkreislauf durch den Wärmepumpenverdampfer gekühlt und entfeuchtet wird, **gekennzeichnet durch**
entweder:
- (a1) Teilen des Kältemittels in eine Flüssigphase und eine Dampfphase,
- (a2) Zuführen der Dampfphase zum Wärmepumpenkompressor,
- (a3) Zuführen der Flüssigphase zu einem weiteren Kühlverdampfungsmittel zum Erhitzen und Verdampfen der Flüssigphase,
- (a4) Zuführen der kältemittelverdampften Phase zum Wärmepumpenkompressor,
oder
- (b1) Teilen des Kältemittels in eine Kältemittel-Flüssigphase und eine Kältemittel-Dampfphase,
- (b2) Zuführen der Kältemittel-Dampfphase und der Kältemittel-Flüssigphase zu einem weiteren Kühlverdampfungsmittel zum Erhitzen und Verdampfen des Kältemittels,
- (b3) Zuführen des Kältemittels zum Wärmepumpenkompressor.

13. Verfahren nach Anspruch 12, wobei das Dehnen und Kühlen des Kältemittels durch ein Dehnmittel (16) in Reaktion auf die Kältemittel-Flüssigmenge innerhalb des Kältemittelphasentrenners (22) gesteuert wird.

14. Verfahren nach Anspruch 12 oder 13, wobei das Zuführen der Flüssigphase (36) zum weiteren Kältemittelverdampfungsmittel (24) während einer vorübergehenden Aufwärmphase unterbrochen wird.

15. Verfahren nach einem der Ansprüche 12 bis 14, das den Schritt des Kühlens und Entfeuchtens des Luftstroms im Luftstromkreislauf durch die weitere Kältemittelverdampfung umfasst.

## Revendications

1. Sèche-linge ayant un système de pompe à chaleur, dans lequel :
- le système de pompe à chaleur comprend un circuit de courant d'air (10) pour un courant d'air et un circuit de réfrigérant fermé (12) pour un réfrigérant,
- le circuit de courant d'air (10) comprend un condenseur de pompe à chaleur (18), un évaporateur de pompe à chaleur (20) et un tambour à linge (26),
- le circuit de réfrigérant (12) comprend au moins un compresseur de pompe à chaleur (14), le condensateur de pompe à chaleur (18), des moyens de détente (16) et l'évaporateur de pompe à chaleur (20),
- le circuit de courant d'air (10) et le circuit de réfrigérant (12) sont couplés thermiquement par le condenseur de pompe à chaleur (18) et l'évaporateur de pompe à chaleur (20),
- le condenseur de pompe à chaleur (18) est un échangeur thermique et disposé pour réchauffer le courant d'air et refroidir le réfrigérant, et
- l'évaporateur de pompe à chaleur (20) est un échangeur thermique et disposé pour refroidir le courant d'air et réchauffer le réfrigérant,
le circuit de réfrigérant (12) comprend au moins un séparateur de phase de réfrigérant (22) agencé entre l'évaporateur de pompe à chaleur (20) et le compresseur de pompe à chaleur
**caractérisé par le fait que** des moyens d'évaporation de réfrigérant supplémentaires (24, 42, 44) sont agencés entre le séparateur de phase de réfrigérant (22) et le compresseur de pompe à chaleur (14).

2. Sèche-linge selon la revendication 1, dans lequel le séparateur de phase de réfrigérant (22) est agencé en aval de l'évaporateur de pompe à chaleur (20) par rapport à la direction d'écoulement du réfrigérant le long du système de pompe à chaleur.

3. Sèche-linge selon l'une des revendications 1 ou 2, dans lequel les moyens d'évaporation de réfrigérant supplémentaires (24, 42, 44) comprennent au moins un évaporateur supplémentaire (24) couplé thermiquement au circuit de courant d'air (10) pour refroidir et déshumidifier le courant d'air dans le circuit de courant d'air (10).

4. Sèche-linge selon la revendication 3, dans lequel l'évaporateur supplémentaire (24) est agencé en amont ou en aval de l'évaporateur de réfrigérant de pompe à chaleur (20) par rapport à la direction du courant d'air dans le circuit de courant d'air (10).

5. Sèche-linge selon la revendication 1, dans lequel les moyens d'évaporation supplémentaires (24, 42, 44) comprennent un côté basse pression (42, 44) d'un échangeur thermique interne de réfrigérant.

6. Sèche-linge selon la revendication 5, dans lequel le côté basse pression (42) de l'échangeur thermique interne est agencé entre une sortie de phase liquide (46) du séparateur de phase de réfrigérant (22) et une section de mélange de réfrigérant (50) disposée en amont du compresseur de pompe à chaleur (14).

7. Sèche-linge selon la revendication 5, dans lequel le côté basse pression (44) de l'échangeur thermique interne est agencé entre une section de mélange de réfrigérant (50) et le compresseur de pompe à chaleur (14).

8. Sèche-linge selon l'une quelconque des revendications précédentes, dans lequel le séparateur de phase de réfrigérant (22) sépare la phase liquide et la phase vapeur du réfrigérant par gravité.

9. Sèche-linge selon l'une quelconque des revendications précédentes, dans lequel le circuit de réfrigérant (12) comprend des moyens formant vannes agencés entre le séparateur de phase de réfrigérant (22) et les moyens d'évaporation de réfrigérant supplémentaires (24, 42), les moyens formant vannes pouvant être fermés de telle sorte que l'évaporateur de réfrigérant supplémentaire peut être coupé.

10. Sèche-linge selon l'une quelconque des revendications précédentes, dans lequel les moyens de détente (16) sont aptes à être commandés en réponse à la quantité de liquide de réfrigérant et/ou la quantité de vapeur de réfrigérant contenues dans le séparateur de phase de réfrigérant (22).

11. Sèche-linge selon l'une quelconque des revendications précédentes, dans lequel les moyens de détente (16) sont aptes à être commandés en réponse au niveau de liquide de réfrigérant à l'intérieur du séparateur de phase de réfrigérant (22).

12. Procédé de fonctionnement d'un système de pompe à chaleur d'une sécheuse à culbutage, ledit procédé comprend les étapes de :
- comprimer et réchauffer un réfrigérant dans un circuit de réfrigérant fermé par un compresseur de pompe à chaleur,
- condenser et refroidir le réfrigérant par un condenseur de pompe à chaleur, un courant d'air dans un circuit de courant d'air étant réchauffé par ledit condenseur de pompe à chaleur,
- détendre et refroidir le réfrigérant par des moyens de détente,
- réchauffer le réfrigérant par un évaporateur de pompe à chaleur, le courant d'air dans le circuit de courant d'air étant refroidi et déshumidifié par ledit évaporateur de pompe à chaleur, **caractérisé par**
soit
- (a1) diviser le réfrigérant en une phase liquide et une phase vapeur,
- (a2) alimenter la phase vapeur au compresseur de pompe à chaleur,
- (a3) alimenter la phase liquide à des moyens d'évaporation de réfrigérant supplémentaires pour réchauffer et vaporiser la phase liquide,
- (a4) alimenter la phase vaporisée de réfrigérant au compresseur de pompe à chaleur,
soit
- (b1) diviser le réfrigérant en une phase liquide de réfrigérant et une phase vapeur de réfrigérant,
- (b2) alimenter la phase vapeur de réfrigérant et la phase liquide de réfrigérant à des moyens d'évaporation de réfrigérant supplémentaires pour réchauffer et vaporiser le réfrigérant,
- (b3) alimenter le réfrigérant au compresseur de pompe à chaleur.

13. Procédé selon la revendication 12, dans lequel la détente et le refroidissement du réfrigérant par des moyens de détente (16) sont commandés en réponse au niveau de liquide de réfrigérant à l'intérieur du séparateur de phase de réfrigérant (22).

14. Procédé selon l'une des revendications 12 ou 13, dans lequel l'alimentation de la phase liquide (36) aux moyens d'évaporation de réfrigérant supplémentaires (24) est interrompue pendant une phase de réchauffement transitoire.

15. Procédé selon l'une quelconque des revendications 12 à 14, comprenant l'étape de refroidissement et de déshumidification du courant d'air dans le circuit de courant d'air par les moyens d'évaporation de réfrigérant supplémentaires.
